# EUROPÄISCHE PATENTSCHRIFT

(11) **EP 3 177 498 B1**
(45) Veröffentlichungstag und Bekanntmachung des Hinweises auf die Patenterteilung: **31.08.2022**
(21) Anmeldenummer: 15752969.4
(22) Anmeldetag: 04.08.2015
(51) Int. Cl.: B60W 40/04, G06K 9/62, G08G 1/16

(54) **VERFAHREN ZUM ERZEUGEN EINER UMGEBUNGSKARTE EINES UMGEBUNGSBEREICHS EINES KRAFTFAHRZEUGS, FAHRERASSISTENZSYSTEM SOWIE KRAFTFAHRZEUG**
METHOD FOR GENERATING A MAP OF SURROUNDINGS OF AN AREA OF THE SURROUNDINGS OF A MOTOR VEHICLE, DRIVER ASSISTANCE SYSTEM AND MOTOR VEHICLE
PROCÉDÉ SERVANT À PRODUIRE UNE CARTE DES ENVIRONS D'UNE ZONE DES ENVIRONS D'UN VÉHICULE AUTOMOBILE, SYSTÈME D'ASSISTANCE AU CONDUCTEUR AINSI QUE VÉHICULE AUTOMOBILE

(30) Priorität: 05.08.2014 DE 102014111126
(43) Veröffentlichungstag der Anmeldung: 14.06.2017
(73) Patentinhaber: Valeo Schalter und Sensoren GmbH, 74321 Bietigheim-Bissingen (DE)
(72) Erfinder: HEIMBERGER, Markus, 74321 Bietigheim-Bissingen (DE); VOVKUSHEVSKY, Vsevolod, 74321 Bietigheim-Bissingen (DE)
(74) Vertreter: Pothmann, Karsten
(86) Internationale Anmeldenummer: PCT/EP2015/067902
(87) Internationale Veröffentlichungsnummer: WO 2016/020357

(56) Entgegenhaltungen:
- EP-A1- 2 172 920
- DE-A1- 10 324 897
- DE-A1-102005 003 194
- DE-A1-102007 023 888
- DE-A1-102012 023 746

## Beschreibung

Die vorliegende Erfindung betrifft ein Verfahren zum Erzeugen einer Umgebungskarte eines Umgebungsbereichs eines Kraftfahrzeugs, bei welchem ein Objekt in dem Umgebungsbereich mittels einer Sensoreinrichtung des Kraftfahrzeugs erfasst wird, anhand von Sensordaten der Sensoreinrichtung mittels einer Steuereinrichtung des Kraftfahrzeugs ein Positionswert, welcher eine Position des Objekts beschreibt, ermittelt wird und der ermittelte Positionswert in die Umgebungskarte übertragen wird. Die Erfindung betrifft außerdem ein Fahrerassistenzsystem sowie ein Kraftfahrzeug.

Das Interesse richtet sich vorliegend insbesondere auf Fahrerassistenzsysteme, die den Fahrer beim Führen des Kraftfahrzeugs unterstützen oder vollautomatisch zum Navigieren des Kraftfahrzeugs benutzt werden. Ein solches Fahrerassistenzsystem kann den Fahrer beispielweise beim Einparken und/oder beim Ausparken des Kraftfahrzeugs unterstützen oder vollautomatisch Parklücken suchen und wenn dies vom Fahrer gewünscht ist, in die Parklücke einparken. Weiterhin kann das Fahrerassistenzsystem dazu dienen, eine Kollision zwischen dem Kraftfahrzeug und einem Objekt zu verhindern. Derartige Fahrerassistenzsysteme nutzen Informationen über die Eigenschaften der Fahrzeugumgebung. Diese Informationen können beispielsweise in einer digitalen Umgebungskarte gespeichert sein, welche den Umgebungsbereich des Kraftfahrzeugs bzw. die Fahrzeugumgebung beschreibt.

Hierzu beschreibt die EP 0 650 866 B1 ein Verfahren zum Ausparken eines Fahrzeugs aus einer Parklücke, wobei mittels von am Fahrzeug angebrachten Sensoren der Abstand zu einem Hindernis in Fahrtrichtung gemessen wird. Weiterhin ist eine Steuerung vorgesehen, die mit Hilfe der Messwerte eine lokale Umgebungskarte im Bereich des Fahrzeugs bildet, in der Raumdaten und Daten der Hindernisse eingetragen sind. Darüber hinaus bestimmt die Steuerung mit Hilfe der Umgebungskarte ein Umgebungsmodell, mit dem eine Fahrstrategie für den Ausparkvorgang festgelegt wird.

Die meisten bekannten Umgebungskarten sind sogenannte Grid-basierte Karten. Das heißt die Umgebungskarte wird in ein Gitter bzw. Grid unterteilt. Die einzelnen Gitter bzw. Grids können auch als Zellen bezeichnet werden. Detektierte Objekte werden in der Umgebungskarte derart abgelegt, dass das entsprechend zur relevanten Fahrzeugdistanz zugehörige Gitter als belegt markiert wird. In der EP 1 731 922 B1 ist ein Verfahren zum Bestimmen von Freiflächen in einer Umgebung eines Kraftfahrzeugs beschrieben. Hierbei wird eine Signallaufzeitmessung zum Vermessen von Objekten in der Umgebung des Kraftfahrzeugs durchgeführt. Anhand der Ergebnisse der Signallaufzeitmessung wird eine Objektwahrscheinlichkeitsverteilung bestimmt und mit einer Hinderniswahrscheinlichkeitsverteilung fusioniert. Dabei wird die Hinderniswahrscheinlichkeitsverteilung mittels einer zellulären Umgebungskarte des Kraftfahrzeugs repräsentiert. Beim Fusionieren werden die Belegungswerte der Zellen verringert und/oder erhöht, wobei die Zellen ursprünglich einen vorgegebenen Belegungswert aufweisen.

Ferner beschreibt die DE 10 2012 214 307 A1 ein Verfahren zum Modellieren eines Umfelds eines Objekts, insbesondere eines Fahrzeugs. Hierbei wird zumindest eine Zelle mit eindeutigen Identifikationen bereitgestellt. Darüber hinaus wird für die Zelle ein diskreter Belegungswert oder eine Belegungswahrscheinlichkeit angegeben. Wenn ein Hindernis erkannt wird, wird dessen Position bestimmt und eine diskrete Hindernisposition in einer der bereitgestellten Zellen bestimmt, die zu der Position des Hindernisses korrespondiert. Zudem wird der Belegungswert oder die Belegungswahrscheinlichkeit der zumindest einen diskreten Hindernisposition derart geändert, dass die Präsenz des Hindernisses angezeigt wird.

Um die Objekte in einer Grid-basierten Umgebungskarte ablegen zu können, müssen die Objekte üblicherweise vereinheitlicht werden. Eine sehr einfache Möglichkeit ist es hierbei, dass das Grid einen Zähler enthält, der beschreibt, wie oft das Objekt in dem jeweiligen Grid detektiert wurde. Dabei können auch verschiedene Wahrscheinlichkeitstheorien wie Bayes oder Dempster Shafer berücksichtigt werden.

Darüber hinaus kann es der Fall sein, dass unterschiedliche Fahrerassistenzsysteme unterschiedliche Sensoren verwenden. Wenn eine Fahrerassistenzfunktion die Umgebung des Kraftfahrzeugs selbstständig und alleine darstellt, kann es der Fall sein, dass die Sensordatenfusion dadurch erschwert wird. Hierzu beschreibt die DE 10 2010 018 994 A1 ein Verfahren zum Betreiben eines Fahrerassistenzsystems eines Fahrzeugs, wobei Informationen über eine Umgebung des Fahrzeugs durch zumindest einen Sensor des Fahrerassistenzsystems und aus diesen Informationen Sensordaten bereitgestellt werden. Zudem wird aus den Sensordaten eine digitale Umgebungskarte berechnet und auf Grundlage der Umgebungskarte eine Funktionalität durch das Fahrerassistenzsystem in dem Fahrzeug bereitgestellt wird. Die Umgebungskarte wird für zumindest zwei verschiedene Funktionalitäten des Fahrerassistenzsystems in einem gemeinsamen Format berechnet, auf Grundlage der gemeinsamen Umgebungskarte werden die zumindest zwei Funktionalitäten durch das Fahrerassistenzsystem bereitgestellt.

Die DE 10 2007 023 888 A1 zeigt eine Vorrichtung mit einem Laserradar, die dazu verwendet wird, einen Fußgänger zu erkennen, indem sie eine Position von Reflexionsobjekten erfasst wird und die Objekte in einem zweidimensionalen Koordinatensystem abbildet werden. Es wird weiter bestimmt, ob sich die Objekte bewegen. Weiterhin werden bewegende Objekte, die sich dicht beieinander befinden, gruppiert. Auf der Grundlage einer Gruppengröße einer Objektgruppe kann der der Objektgruppe zugeordnete Fußgänger genau erkannt werden

Weiterhin kann es der Fall sein, dass bei der Vereinheitlichung von Daten unterschiedlicher Fahrerassistenzsysteme sehr schnell Informationen zu sehr abstrahiert werden. Derartige Informationen können beispielsweise eine räumliche Unschärfe bzw. eine Kovarianz sein, die beschreibt, mit welcher räumlichen Auflösung die Sensoren der Fahrerassistenzsysteme das Objekt erfassen können. Diese Informationen müssen als zusätzliches Attribut gespeichert werden und es muss zusätzlicher Aufwand betrieben werden, um die Objekte mit dieser Methode zu fusionieren. Die räumliche Unsicherheit ist ein üblicherweise verwendetes Basisverfahren, mit dem eine spätere Datenfusion bzw. Entscheidungskriterien herbeigeführt werden können. So kann beispielsweise bestimmt werden, mit welcher räumlichen Wahrscheinlichkeit sich ein Objekt in einem voraussichtlichen Fahrschlauch des Kraftfahrzeugs befindet oder nicht.

Es ist Aufgabe der vorliegenden Erfindung, eine Lösung aufzuzeigen, wie Fahrerassistenzsysteme, die eine Umgebungskarte eines Umgebungsbereichs eines Kraftfahrzeugs nutzen, zuverlässiger betrieben werden können.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Ansprüche, der Beschreibung und der Figuren.

Ein erfindungsgemäßes Verfahren dient zum Erzeugen einer Umgebungskarte eines Umgebungsbereichs eines Kraftfahrzeugs. Dabei wird ein Objekt in dem Umgebungsbereich mittels einer Sensoreinrichtung des Kraftfahrzeugs erfasst. Anhand von Sensordaten der Sensoreinrichtung wird mittels einer Steuereinrichtung des Kraftfahrzeugs ein Positionswert, welcher eine Position des Objekts beschreibt, ermittelt und der ermittelte Positionswert wird in die Umgebungskarte übertragen. Ferner wird ein Vektor zwischen dem Objekt und einem vorbestimmten Bezugspunkt des Kraftfahrzeugs, welcher einen Ursprung eines Fahrzeugkoordinatensystems bildet, ermittelt, der ermittelte Vektor wird von dem Fahrzeugkoordinatensystem in ein globales Koordinatensystem der Umgebungskarte transformiert und der Positionswert in dem globalen Koordinatensystem wird anhand des transformierten Vektors bestimmt. Die Umgebungskarte ist als vektorielle Umgebungskarte vorgesehen, in der das Objekt vektoriell abgelegt ist, wobei die Umgebungskarte einem Fahrerassistenzsystem bereitgestellt wird.

Vorliegend wird zumindest ein Objekt in dem Umgebungsbereich des Kraftfahrzeugs bzw. in der Fahrzeugumgebung mit einer Sensoreinrichtung erfasst. Die Sensoreinrichtung kann entsprechende Abstandssensoren umfassen, mit denen ein Abstand von dem Kraftfahrzeug zu dem Objekt bestimmt werden kann. Somit kann eine Steuereinrichtung des Kraftfahrzeugs anhand der Sensordaten eine Position des Objekts bzw. eine relative Lage des Kraftfahrzeugs zu dem Objekt ermitteln. In dem Kraftfahrzeug wird ein Bezugspunkt vorbestimmt. Dieser Bezugspunkt kann beispielsweise der Mittelpunkt der Hinterachse des Kraftfahrzeugs sein. Ausgehend von diesem Bezugspunkt wird ein Vektor zu dem Objekt bestimmt. Dieser Vektor umfasst eine Richtungsinformation und eine Entfernungsinformation, welche die Lage des Bezugspunkts zu dem Objekt beschreiben. Der ermittelte Vektor wird ausgehend von dem Fahrzeugkoordinatensystem, dessen Ursprung in den Bezugspunkt des Kraftfahrzeugs gelegt ist, in ein globales Koordinatensystem bzw. Weltkoordinatensystem der Umgebungskarte transformiert. Anhand des transformierten Vektors in dem globalen Koordinatensystem wird eine Position des Objekts in der Umgebungskarte bestimmt und als Positionswert in der Umgebungskarte angezeigt.

Erfindungsgemäß wird also eine vektorielle Umgebungskarte des Umgebungsbereichs des Kraftfahrzeugs bereitgestellt. Dabei wird die ermittelte Position des Objekts im Umgebungsbereich des Kraftfahrzeugs anhand eines Vektors in einem globalen Koordinatensystem der Umgebungskarte dargestellt. Somit ist die Position des Objekts, die in der Umgebungskarte dargestellt wird, unabhängig von der Bewegung des Kraftfahrzeugs. Dadurch, dass der Positionswert, der die Position des Objekts beschreibt, in der Umgebungskarte bzw. in dem globalen Koordinatensystem als Vektor hinterlegt ist, kann die Umgebungskarte im Vergleich zu bekannten Grid basierten Umgebungskarten einfacher skaliert werden. Insbesondere kann verhindert werden, dass beim Skalieren ein Datenverlust auftritt. Zudem kann der Positionswert in der vektoriellen Umgebungskarte effizient gespeichert werden.

Bevorzugt wird der Positionswert zusätzlich anhand eines vorbestimmten Ursprungs des globalen Koordinatensystems bestimmt. Die Umgebungskarte beschreibt einen vorbestimmten Bereich in dem Umgebungsbereich des Kraftfahrzeugs. Dabei wird ein Ursprung für das globale Koordinatensystem in dem Umgebungsbereich definiert. Dies kann beispielsweise bei einem Start des Fahrerassistenzsystems bzw. des Kraftfahrzeugs erfolgen. Hierbei kann eine entsprechende Initialisierung des Fahrerassistenzsystems durchgeführt werden, bei welcher der Ursprung des globalen Koordinatensystems bestimmt bzw. festgelegt wird. Ausgehend von diesem festgelegten Ursprung des globalen Koordinatensystems wird die Position des Objekts in der Umgebungskarte anhand des transformierten Vektors bestimmt. Die Position des Objekts bzw. der Positionswert in dem globalen Koordinatensystem verändert sich somit im Laufe der Zeit und insbesondere bei einer Bewegung des Kraftfahrzeugs nicht mehr, falls es sich um ein statisches Objekt handelt.

In einer weiteren Ausführungsform wird der Ursprung des Fahrzeugkoordinatensystems in das globale Koordinatensystem transformiert und der transformierte Ursprung des Fahrzeugkoordinatensystems wird in der Umgebungskarte angezeigt. Durch das Anzeigen des Ursprungs des Fahrzeugkoordinatensystems in der Umgebungskarte kann zudem die Position des Kraftfahrzeugs bzw. die Position des Bezugspunkts des Kraftfahrzeugs in dem globalen Koordinatensystem und somit in der Umgebungskarte bestimmt werden. Somit ist die relative Lage des Kraftfahrzeugs bezüglich des Objekts in der Umgebungskarte hinterlegt. Diese Information kann von den Fahrerassistenzsystemen des Kraftfahrzeugs genutzt werden.

Weiterhin ist es vorteilhaft, wenn eine Eigenbewegung des Kraftfahrzeugs fortlaufend ermittelt wird und die Lage des Ursprungs des Fahrzeugkoordinatensystems in der Umgebungskarte anhand der ermittelten Eigenbewegung des Kraftfahrzeugs verändert wird. Die Eigenbewegung des Kraftfahrzeugs kann beispielsweise mit Hilfe eines satellitengestützten Positionsbestimmungssystems bestimmt werden. Alternativ oder zusätzlich kann die Eigenbewegung des Kraftfahrzeugs mittels Odometrie bestimmt werden. Hierzu wird die Umdrehungszahl zumindest eines Rades des Kraftfahrzeugs ermittelt. Weiterhin kann der Lenkwinkel des Kraftfahrzeugs fortlaufend ermittelt werden. Die Information über die Eigenbewegung des Kraftfahrzeugs kann dazu verwendet werden, die Position des Kraftfahrzeugs in der Umgebungskarte, also die Lage des Ursprungs des Fahrzeugkoordinatensystem in dem globalen Koordinatensystem, fortlaufend zu aktualisieren. Auf diese Weise kann eine Information über die relative Lage des Kraftfahrzeugs zu dem Objekt für die Fahrerassistenzsysteme bereitgestellt werden. Der Vorteil der Abspeicherung der Eigenbewegung bzw. der Eigentrajektorie des Kraftfahrzeugs in einer Umfeldkarte ist, dass das Kraftfahrzeug beispielsweise beim Abbruch eines Parkvorgangs zurück auf den Startpunkt navigiert werden kann. Außerdem lässt sich dadurch auch der Blickwinkel, unter welchem detektierte Objekte in die Umgebungskarte eingetragen wurden, rekonstruieren.

In einer weiteren Ausgestaltung wird anhand des transformierten Ursprungs des Fahrzeugkoordinatensystems ein Bereich zum Anzeigen des Positionswerts in dem globalen Koordinatensystem vorbestimmt. Es kann also ein Bereich in dem globalen Koordinatensystem vorbestimmt werden, der den Ursprung des in das globale Koordinatensystem transformierten Fahrzeugkoordinatensystems umgibt. Dieser Bereich kann rechteckförmig oder quadratisch gewählt werden. Der Bereich kann auch so gewählt werden, dass sich der Ursprung des Fahrzeugkoordinatensystems im Wesentlichen mit in diesem vorbestimmten Bereich befindet. Vorliegend werden nur in diesem Bereich Objekte in der Umgebungskarte angezeigt. Somit kann beispielsweise ermöglicht werden, dass nur Objekte angezeigt werden, die für einen Betrieb des Kraftfahrzeugs relevant sind. Objekte, die sich weit entfernt vom Kraftfahrzeug befinden, werden vorliegend nicht angezeigt.

Hierbei ist es insbesondere vorgesehen, dass der Positionswert aus der Umgebungskarte gelöscht wird, falls der Positionswert außerhalb des vorbestimmten Bereichs befindet. Die Abmessungen des vorbestimmten Bereichs bezüglich der Raumrichtungen des globalen Koordinatensystems können insbesondere mindestens die Hälfte des Bereichs betragen, der mit dem globalen Koordinatensystem dargestellt wird. Somit können beispielsweise nur die Objekte in der Umgebungskarte angezeigt werden, die für den Betrieb der Fahrerassistenzsysteme des Kraftfahrzeugs relevant sind. Dadurch, dass die Objekte, die außerhalb des vorbestimmten Bereichs angeordnet sind, gelöscht werden, kann die Umgebungskarte mit geringem Speicheraufwand bereitgestellt werden.

In einer weiteren Ausführungsform wird das globale Koordinatensystem als Torus modelliert. Dabei ist es insbesondere vorgesehen, dass das globale Koordinatensystem als zweidimensionaler Torus modelliert wird. So kann es beispielsweise der Fall sein, dass bei der Bewegung der Umgebungskarte Objekte auf einer erstens aus einem Anzeigebereich der Umgebungskarte austreten und auf einer gegenüberliegenden Seite in den Anzeigebereich wieder eintreten. Wenn in der Umgebungskarte ein entsprechender vorbestimmter Bereich vorgesehen wird, kann verhindert werden, dass Objekte, die aus diesem Bereich austreten, zu einem späteren Zeitpunkt geometrisch falsch abgebildet werden. Wenn das globale Koordinatensystem als Torus modelliert wird, kann die Umgebungskarte mit einem geringen Speicheraufwand bereitgestellt werden.

Weiterhin ist es vorteilhaft, wenn zusätzlich zu dem Positionswert zumindest eine Eigenschaft des Objekts in der Umgebungskarte hinterlegt wird. Die Eigenschaft des Objekts kann das Objekt selbst charakterisieren. Weiterhin kann es vorgesehen sein, dass die Eigenschaft die Messung des Objekts charakterisiert. Somit können neben der Position des Objekts in der Umgebungskarte auch die Eigenschaften des Objekts gespeichert werden. Dabei kann es zudem vorgesehen sein, dass die zumindest eine Eigenschaft, die zusätzlich zu dem Positionswert in der Umgebungskarte gespeichert ist, jederzeit geändert werden kann. Dies bedeutet, dass die zumindest eine Eigenschaft verändert oder gelöscht werden kann. Es ist auch denkbar, dass dem Positionswert zu jedem Zeitpunkt eine Eigenschaft hinzugefügt wird. Diese Eigenschaften können beispielsweise zur Steuerung der Fahrerassistenzsysteme des Kraftfahrzeugs verwendet werden oder auch zu einer Datenfusion herangezogen werden.

Bevorzugt wird als die zumindest eine Eigenschaft der ermittelte Vektor und/oder ein Zeitpunkt, zu welchem die Position des Objekts ermittelt wurde und/oder eine Kennung des Objekts in der Umgebungskarte hinterlegt. Anhand des ermittelten Vektors kann die Position des Objekts bzw. die relative Lage des Objekts zu dem Kraftfahrzeug in dem Fahrzeugkoordinatensystem bestimmt werden. Diese Information kann zudem in der Umgebungskarte hinterlegt werden. Darüber hinaus kann der Zeitpunkt zu welchem das Objekt erkannt wurde und/oder die Position des Objekts ermittelt wurde in der Umgebungskarte hinterlegt sein. Dies kann beispielsweise notwendig sein, da das Datenaufkommen asynchron ist und die meisten Informationen bezüglich des erfassten Objekts in der Vergangenheit liegen. Insbesondere wenn das Kraftfahrzeug weiter bewegt wurde, können die Informationen bezüglich des Zeitpunkts der Messung hilfreich sein. So kann beispielsweise die relative Lage des Kraftfahrzeugs zu dem Objekt in Abhängigkeit von der Zeit bestimmt werden. Weiterhin kann untersucht werden, ob das Objekt statisch ist. Alternativ dazu kann beispielsweise ermittelt werden, ob sich das Objekt nicht mehr in der Umgebung des Kraftfahrzeugs befindet. Weiterhin kann es vorgesehen sein, dass eine Kennung bzw. eine ID des Objekts in der Umgebungskarte hinterlegt wird. Dies kann beispielsweise vorteilhaft sein, wenn mehrere Objekte in der Umgebung des Kraftfahrzeugs erfasst werden und in die Umgebungskarte eingetragen werden.

Weiterhin ist es vorteilhaft, wenn Abmessungen eines Anzeigeelements zum Anzeigen des Positionswerts in der Umgebungskarte in Abhängigkeit von einem eine Genauigkeit des Erfassens einer Position des Objekts beschreibenden Kovarianzwerts angepasst wird. Im einfachsten Fall kann das Objekt in der Umgebungskarte als Punkt dargestellt werden. Die Sensoren der Sensoreinrichtung, mit denen das Objekt erfasst wird, weisen üblicherweise eine räumliche Unsicherheit bzw. eine räumliche Ungenauigkeit auf. Diese räumliche Unsicherheit kann in einem Kovarianzwert ausgedrückt werden. Anhand des Kovarianzwerts kann eine Abmessung eines Anzeigeelements, zum Anzeigen des Objekts in der Umgebungskarte angepasst werden. Wenn das Objekt beispielsweise nur ungenau erfasst werden kann, kann das Anzeigeelement in der Umgebungskarte größer dargestellt werden. Wenn das Objekt bzw. die Lage des Objekts genau bestimmt werden kann, kann das Anzeigeelement kleiner dargestellt werden.

In einer Ausführungsform wird die Position des Objekts mit zumindest zwei Abstandssensoren der Sensoreinrichtung ermittelt und die Abmessungen des Anzeigeelements werden in Abhängigkeit von der mit den zumindest zwei Abstandssensoren ermittelten Position angepasst. Die Sensoreinrichtung kann beispielsweise zumindest einen Ultraschallsensor, zumindest einen Laserscanner, zumindest einen Lidar-Sensor, zumindest einen Radarsensor und/oder zumindest eine Kamera umfassen. Dabei kann das Objekt in dem Umgebungsbereich des Kraftfahrzeugs mit zumindest zwei Abstandssensoren erfasst werden. Diese Abstandssensoren weisen üblicherweise unterschiedliche räumliche Unsicherheiten auf. Dabei können die Sensordaten der zumindest zwei Abstandssensoren fusioniert werden. Somit kann die Genauigkeit bei der Erfassung des Objekts erhöht werden. Die Erhöhung der Genauigkeit bei der Erfassung des Objekts kann beispielsweise dazu führen, dass das Anzeigeelement in der Umgebungskarte kleiner dargestellt wird.

Ein erfindungsgemäßes Fahrerassistenzsystem umfasst eine Steuereinrichtung, welche dazu ausgelegt ist, ein erfindungsgemäßes Verfahren durchzuführen. Das Fahrerassistenzsystem kann beispielsweise zur Parklückenvermessung dienen. Weiterhin kann das Fahrerassistenzsystem den Fahrer beim Einparken und/oder Ausparken in eine Parklücke unterstützen. Weiterhin kann das Fahrerassistenzsystem dazu dienen, das Kraftfahrzeug vor einer Kollision mit einem Objekt zu schützen. Außerdem kann das Fahrerassistenzsystem auch dazu benutzt werden, das Kraftfahrzeug vollautomatisch zu navigieren.

Bevorzugt ist die Steuereinrichtung des Fahrerassistenzsystems dazu ausgelegt, das Kraftfahrzeug anhand der Umgebungskarte zumindest semi-autonom zu manövrieren. Die Steuereinrichtung kann beispielsweise eine Fahrtrajektorie bestimmen, entlang der das Kraftfahrzeug manövriert werden soll, um eine Kollision mit dem Objekt zu verhindern. Dabei kann das Fahrerassistenzsystem bzw. die Steuereinrichtung die Lenkung des Kraftfahrzeugs übernehmen. In diesem Fall übernimmt der Fahrer die Betätigung des Gaspedals und der Bremse. Alternativ dazu kann es auch vorgesehen sein, dass das Fahrerassistenzsystem bzw. die Steuereinrichtung in eine Antriebseinrichtung und eine Bremseinrichtung des Kraftfahrzeugs eingreift und das Kraftfahrzeug autonom manövriert.

Ein erfindungsgemäßes Kraftfahrzeug umfasst ein erfindungsgemäßes Kraftfahrzeug. Das Kraftfahrzeug ist insbesondere als Personenkraftwagen ausgebildet.

Die Umgebungskarte kann zudem dazu ausgelegt sein, von dem Kraftfahrzeug zu einem weiteren Fahrzeug, einem weiteren Verkehrsteilnehmer und/oder einer Infrastruktur übertragen zu werden. Dazu kann die Umgebungskarte beispielsweise so ausgebildet sein, dass sein ein Kommunikationsprotokoll erfüllt. Die Umgebungskarte kann beispielsweise gemäß dem Protokoll ADASIS (Advanced Driver Assistance Systems Interface Specifications) ausgebildet sein.

Die in Bezug auf das erfindungsgemäße Verfahren vorgestellten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Darstellung ein Kraftfahrzeug gemäß einer Ausführungsform der vorliegenden Erfindung;
- Fig. 2: Ein globales Koordinatensystem einer Umgebungskarte und ein Fahrzeugkoordinatensystem;
- Fig. 3: Das globale Koordinatensystem und das Fahrzeugkoordinatensystem in einer weiteren Ausführungsform;
- Fig. 4: Das globale Koordinatensystem, in dem ein vorbestimmter Bereich vorgesehen ist; und
- Fig. 5: Messpunkte verschiedener Abstandssensoren, die in der Umgebungskarte dargestellt werden.

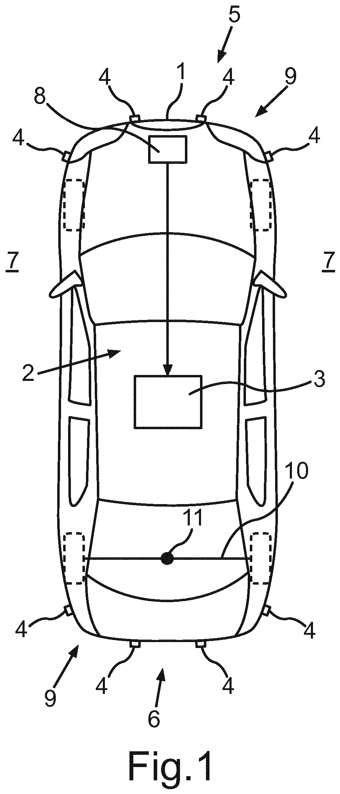

Fig. 1 zeigt ein Kraftfahrzeug 1 gemäß einer Ausführungsform der vorliegenden Erfindung. Das Kraftfahrzeug 1 umfasst ein Fahrerassistenzsystem 2. Das Fahrerassistenzsystem 2 umfasst wiederum eine Steuereinrichtung 3, die beispielsweise durch ein Steuergerät (Electronic Control Unit, ECU) des Kraftfahrzeugs 1 gebildet sein kann. Des Weiteren umfasst das Fahrerassistenzsystem 2 eine Sensoreinrichtung 9.

In dem vorliegenden Ausführungsbeispiel umfasst die Sensoreinrichtung 9 acht Ultraschallsensoren 4. Dabei sind vier Ultraschallsensoren in einem Frontbereich 5 des Kraftfahrzeugs 1 und vier Ultraschallsensoren in einem Heckbereich 6 des Kraftfahrzeugs 1 angeordnet. Mit Hilfe der Ultraschallsensoren 4 kann zumindest ein Objekt in einem Umgebungsbereich 7 des Kraftfahrzeugs 1 erfasst werden. Zudem kann der Abstand zwischen dem Kraftfahrzeug 1 bzw. einem der Ultraschallsensoren 4 zu dem Objekt bestimmt werden. Zu diesem Zweck sendet der Ultraschallsensor 4 ein Ultraschallsignal aus. Dieses Ultraschallsignal wird von dem Objekt reflektiert und von dem Ultraschallsensor 4 wieder empfangen. Anhand der Laufzeit des Ultraschallsignals kann der Abstand zwischen dem Kraftfahrzeug 1 bzw. dem Ultraschallsensor 4 und dem Objekt bestimmt werden. Die Steuereinrichtung 3 ist mit den Ultraschallsensoren 4 zur Datenübertragung verbunden. Entsprechende Datenleitungen sind vorliegend der Übersichtlichkeit halber nicht dargestellt.

Des Weiteren umfasst die Sensoreinrichtung 9 einen Radarsensor 8. Auch der Radarsensor 8 dient dazu, ein Objekt im Umgebungsbereich 7 des Kraftfahrzeugs 1 zu erfassen und die Entfernung zu dem Objekt zu bestimmen. Hierzu sendet der Radarsensor 8 ein Radarsignal bzw. eine elektromagnetische Welle aus. Die von dem Objekt reflektierte elektromagnetische Welle kann mit dem Radarsensor 8 wieder empfangen werden. Auch hier kann anhand der Laufzeit der elektromagnetischen Welle ein Abstand zwischen dem Kraftfahrzeug 1 bzw. dem Radarsensor 8 und dem Objekt ermittelt werden. Der Radarsensor 8 ist zur Datenkommunikation mit der Steuereinrichtung 3 verbunden.

Das Fahrerassistenzsystem 2 kann zudem dazu ausgelegt sein, eine aktuelle Position des Kraftfahrzeugs 1 zu ermitteln. Hierzu können die Signale eines satellitengestützten Positionsbestimmungssystems berücksichtigt werden. Weiterhin kann es vorgesehen sein, dass die aktuelle Position des Kraftfahrzeugs 1 mittels Odometrie bestimmt wird. Zu diesem Zweck können beispielsweise die Anzahl der Radumdrehungen zumindest eines Rades des Kraftfahrzeugs 1 und/oder ein Lenkwinkel des Kraftfahrzeugs 1 erfasst werden. Auf diese Weise kann auch die Eigenbewegung des Kraftfahrzeugs 1 bestimmt werden.

Weiterhin kann die Steuereinrichtung 3 dazu ausgebildet sein, eine Fahrtrajektorie des Kraftfahrzeugs 1 zu berechnen, welche eine kollisionsfreie Bewegung des Kraftfahrzeugs 1 an einem Objekt vorbei beschreibt. Hierzu können auch die äußeren Abmessungen des Kraftfahrzeugs 1 berücksichtigt werden, die beispielsweise in einer Speichereinheit der Steuereinrichtung 3 hinterlegt sind. Mittels des Fahrerassistenzsystems 2 kann dann das Kraftfahrzeug 1 semi-autonom entlang der Fahrtrajektorie bewegt werden. Hierbei kann beispielsweise die Lenkung von dem Fahrerassistenzsystem 2 übernommen werden. Der Fahrer betätigt weiterhin das Gaspedal und die Bremse. Alternativ dazu kann das Kraftfahrzeug 1 auch autonom entlang der Fahrtrajektorie bewegt werden. Hierbei steuert das Fahrerassistenzsystem 2 auch den Antrieb und die Bremse des Kraftfahrzeugs 1.

Wenn mit der Sensoreneinrichtung 9 bzw. den Ultraschallsensoren 4 und/oder dem Radarsensor 8 ein Objekt in dem Umgebungsbereich 7 des Kraftfahrzeugs 1 erfasst wird, soll dieser in eine Umgebungskarte 14 eingetragen werden. Die Umgebungskarte 14 beschreibt zumindest einen Bereich des Umgebungsbereichs 7 des Kraftfahrzeugs 1. Hierzu wird zunächst ein Bezugspunkt 11 des Kraftfahrzeugs 1 vorbestimmt. Der Bezugspunkt 11 befindet sich vorliegend auf dem Mittelpunkt der Hinterachse 10 des Kraftfahrzeugs 1. In der Steuereinrichtung 3 sind die Positionen der jeweiligen Ultraschallsensoren 4 in dem Kraftfahrzeug 1 gespeichert. Zudem ist in der Steuereinrichtung 3 die Position des Radarsensors 8 innerhalb des Kraftfahrzeugs 1 gespeichert. Wenn ein Objekt im Umgebungsbereich 7 des Kraftfahrzeugs mit einem Ultraschallsensor 4 oder mehreren Ultraschallsensoren 4 und/oder mit dem Radarsensor 8 erfasst wird, wird jeweils die relative Lage zwischen den jeweiligen Sensor 4, 8 und dem Objekt ermittelt. Anhand der Anordnung der Sensoren 4, 8 in dem Kraftfahrzeug 1 kann die Steuereinrichtung 3 die relative Lage des Objekts zu dem Bezugspunkt 11 berechnen.

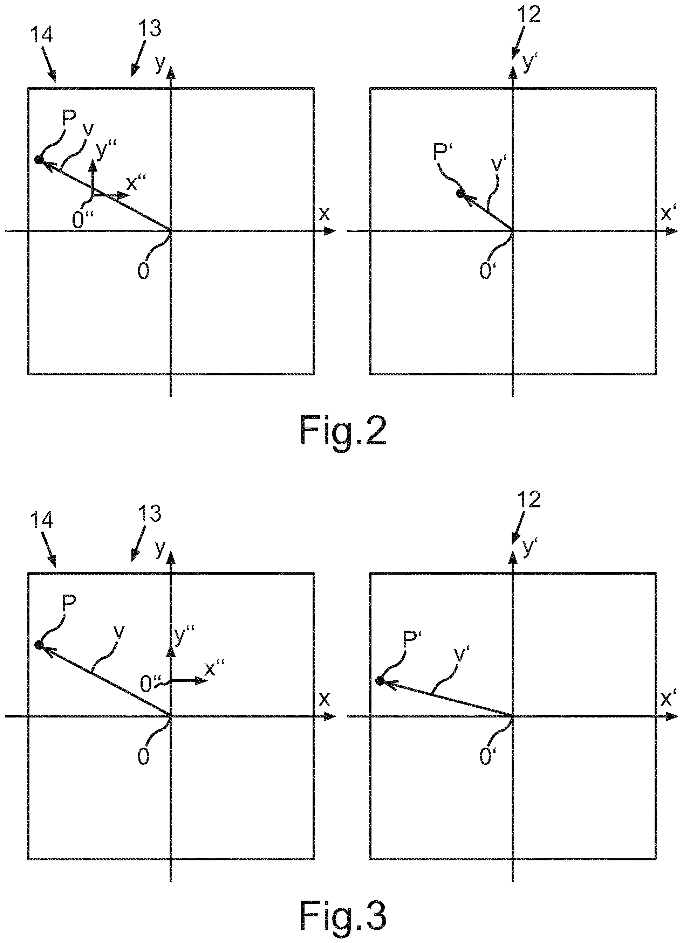

Fig. 2 zeigt ein Fahrzeugkoordinatensystem 12 und ein globales Koordinatensystem 13 einer Umgebungskarte 14. Das Fahrzeugkoordinatensystem 12 weist einen Ursprung 0' auf, der in dem Bezugspunkt 11, also dem Mittelpunkt der Hinterachse 10, des Kraftfahrzeugs 1 angeordnet ist. Das Fahrzeugkoordinatensystem 12 weist die beiden Achsen x' und y' auf. Dabei kann sich die Achse x' entlang der Fahrzeuglängsachse und die Achse y' entlang der Fahrzeugquerachse erstrecken. Vorliegend wird die Position P' des Objekts in das Fahrzeugkoordinatensystem 12 eingetragen. In dem vorliegenden Beispiel befindet sich das Objekt im hinteren linken Bereich des Kraftfahrzeugs 1. Weiterhin wird zwischen dem Ursprung 0' des Fahrzeugkoordinatensystems 12 und der Position P' des Objekts in dem Fahrzeugkoordinatensystem 12 ein Vektor v' ermittelt.

Der ermittelte Vektor v' soll nun von dem Fahrzeugkoordinatensystem 12 in ein globales Koordinatensystem 13 der Umgebungskarte 14 transformiert werden. Die Umgebungskarte 14 beschreibt zumindest einen Bereich des Umgebungsbereichs 7 des Kraftfahrzeugs 1. Dabei wird zum Beschreiben des Umgebungsbereichs 7 in der Umgebungskarte 14 ein globales Koordinatensystem 13 bzw. ein Weltkoordinatensystem genutzt. Dieses globale Koordinatensystem 13 kann beispielsweise als Torus, insbesondere als zweidimensionaler Torus, modelliert werden. Ein Torus kann deshalb verwendet werden, da nur ein endlicher Speicher zur Verfügung steht. Das globale Koordinatensystem 13 weist eine erste Achse x und eine zweite Achse y auf. Darüber hinaus weist das globale Koordinatensystem 13 einen Ursprung 0 auf, der beispielsweise bei einem Start des Fahrerassistenzsystems festgelegt wird. Der Vektor v' in dem Fahrzeugkoordinatensystem 12 wird in das globale Koordinatensystem 13 transformiert. Dies kann gemäß einer vorbestimmen Koordinatentransformation erfolgen. Somit kann in dem globalen Koordinatensystem 13 der transformierte Vektor v dargestellt werden. Anhand des transformierten Vektors v kann ein Positionswert P, welche die Position des Objekts beschreibt, in dem globalen Koordinatensystem 13 bestimmt und angezeigt werden.

Vorliegend wird in dem globalen Koordinatensystem 13 zudem der transformierte Ursprung 0" des Fahrzeugkoordinatensystems 12 sowie die beiden in das globale Koordinatensystem 13 transformierten Achsen x" und y" des Fahrzeugkoordinatensystems 12 angezeigt. Somit kann anhand der Umgebungskarte 14 die relative Lage des Kraftfahrzeugs 1 bzw. des Bezugspunkts 11 des Kraftfahrzeugs 1 zu dem Objekt bestimmt werden.

Fig. 3 zeigt das Fahrzeugkoordinatensystem 12 und das globale Koordinatensystem 13 gemäß Fig. 2 zu einem späteren Zeitpunkt. Hierbei hat sich das Kraftfahrzeug 1 entlang der Achse x' des Fahrzeugkoordinatensystems 12 weiter bewegt. In diesem Fall ändert sich die Position P' des Objekts bezüglich des Ursprungs 0' in dem Fahrzeugkoordinatensystem 12. In dem globalen Koordinatensystem 13 ist die ursprünglich ermittelte Position P des Objekts fest bzw. unabhängig von der Bewegung des Kraftfahrzeugs 1. In dem globalen Koordinatensystem ist der Ursprung 0" des in das globale Koordinatensystem 13 transformierten Fahrzeugkoordinatensystems 12 aktualisiert. Somit kann eine aktuelle Information bezüglich der relativen Lage des Kraftfahrzeugs 1 zu dem Objekt aus der Umgebungskarte 14 bestimmt werden.

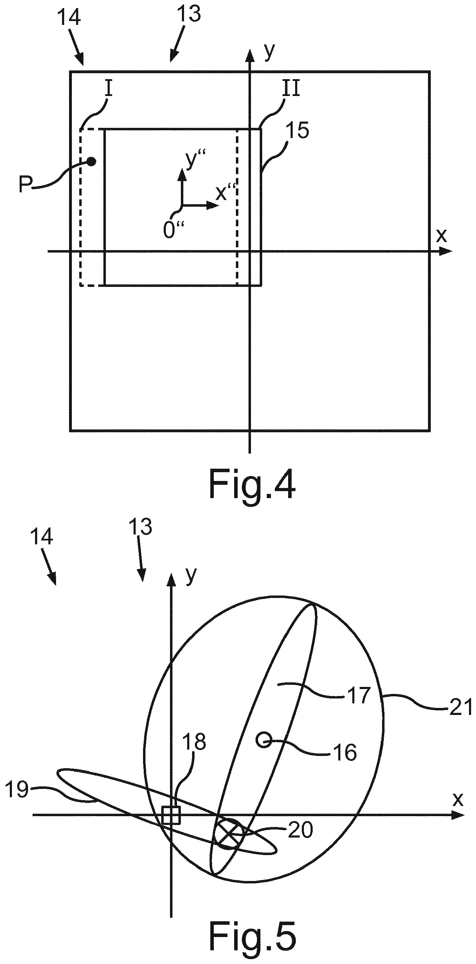

Fig. 4 zeigt die Umgebungskarte 14 in einer weiteren Ausführungsform. Hierbei ist innerhalb der Umgebungskarte 14 bzw. innerhalb des globalen Koordinatensystems 13 ein vorbestimmter Bereich 15 vorgesehen. Dabei werden nur Objekte in der Umgebungskarte 14 angezeigt, die innerhalb dieses vorbestimmten Bereichs 15 angeordnet sind. Objekte bzw. Punkte, die außerhalb dieses vorbestimmten Bereichs angeordnet sind, werden in der Umgebungskarte 14 gelöscht. Vorliegend ist gezeigt, wie sich der vorbestimmte Bereich 15 in Folge der Bewegung des Kraftfahrzeugs 1 von der Position I in die Position II bewegt. Wenn sich der vorbestimmte Bereich in der Position II befindet, ist der Positionswert P nicht mehr in dem vorbestimmten Bereich 15 angeordnet und wird gelöscht. Dies ist insbesondere vorteilhaft, da das globale Koordinatensystem 13 als Torus modelliert wird. Somit kann verhindert werden, dass Objekte bzw. Punkte, die einmal aus dem vorbestimmten Bereich 15 austreten, nicht zu einem späteren Zeitpunkt geometrisch falsch abgebildet werden.

Fig. 5 zeigt die Umgebungskarte 14 bzw. das globale Koordinatensystem 13 in einer weiteren Ausführungsform. Dabei beschreibt ein erster Messpunkt 16 die Position des Objekts im Umgebungsbereich 7, der beispielsweise mit einem der Ultraschallsensoren 4 ermittelt wurde. Der Bereich 17 beschreibt die Kovarianz bzw. räumliche Unsicherheit, die bei dem Messen des Messpunktes 17 vorliegt. Weiterhin ist in dem globalen Koordinatensystem ein Messpunkt 18 gezeigt, dessen Bereich der räumlichen Unsicherheit 19 ebenfalls dargestellt ist. Der Messpunkt 18 kann beispielsweise mit dem Radarsensor 8 aufgezeichnet worden sein. Wenn die beiden Messpunkte 16 und 18 miteinander mittels Datenfusion fusioniert werden, kann beispielsweise der Punkt 20 gebildet werden. Diesem kann eine Anzeigeelement 21 zugeordnet werden, welches zum Anzeigen des Positionswerts P dient. Die Abmessungen des Anzeigeelements 21 werden anhand der Kovarianzen bzw. der räumlichen Unsicherheiten 17 und 18 bestimmt. Vorliegend erfolgt die Fusion der Sensordaten also über die räumliche Unsicherheit der erfassten Objekte. Für das Ergebnis kann eine neue geometrische Position bestimmt werden. Dies kann sehr einfach erfolgen, da die Positionsinformationen auf Vektoren basieren. Dies kann sehr einfach erfolgen, da die Umgebungskarte 14 auf Vektoren basiert. Es können aber einfachere oder komplexere Modelle ebenfalls implementiert werden und zwar in der Art und Weise das das jetzige Verfahren ersetzt oder ergänzt. Damit beeinflusst die vektorielle Umgebungskarte 14 nicht die Genauigkeit der Erfassung der Objekte. Die Umgebungskarte 14 ist nur abhängig vom Sensor 4, 8 selbst und der gewählten Sensormodelle zur Fusion.

Die vorliegend beschriebene Umgebungskarte 14 weist gegenüber einer Grid basierten Umgebungskarte den Vorteil auf, dass die Umgebungskarte 14 dynamisch skaliert werden kann, ohne Daten zu sehr zu abstrahieren oder gar zu verlieren. Das heißt es können sehr effizient Daten gespeichert werden. Beispielsweise kann man unterschiedliche Umgebungskarten 14 für einen Nahbereich und einen Fernbereich vorsehen. In dem Nahbereich kann die Umgebungskarte 14 eine Auflösung von einigen Zentimetern aufweisen. In dem Fernbereich kann die Umgebungskarte 14 beispielsweise eine Auflösung von einigen Kilometern aufweisen. Da die Objekte in der Umgebungskarte 14 vektoriell abgelegt sind, lassen sich diese sehr einfach in die verschiedenen Karten bzw. Anzeigebereiche übertragen. Ein weiterer Vorteil der Umgebungskarte 14 ist, dass keine einheitliche Skalierung verwendet werden muss, wenn verschiedene Sensoren mit unterschiedlicher Skalierung verwendet werden.

Weiterhin ist die vektorielle Karte unabhängig von einer vordefinierten Gridgröße. Wenn beispielsweise zwei Objekte von zwei verschiedenen Sensoren in ein Grid bzw. in einen Bereich fallen, werden diese üblicherweise als zu dem gleichen Objekt zugehörig angenommen. Somit hat das gewählte Grid einen großen Einfluss auf das Fusionsergebnis bzw. auf die Genauigkeit der Objekte.

## Patentansprüche

1. Verfahren zum Erzeugen einer Umgebungskarte (14) eines Umgebungsbereichs (7) eines Kraftfahrzeugs (1), bei welchem ein Objekt in dem Umgebungsbereich (7) mittels einer Sensoreinrichtung (9) des Kraftfahrzeugs (1) erfasst wird, anhand von Sensordaten der Sensoreinrichtung (9) mittels einer Steuereinrichtung (3) des Kraftfahrzeugs (1) ein Positionswert (P), welcher eine Position des Objekts beschreibt, ermittelt wird und der ermittelte Positionswert (P) in die Umgebungskarte (14) übertragen wird, wobei ein Vektor (v') zwischen dem Objekt und einem vorbestimmten Bezugspunkt (11) des Kraftfahrzeugs (1), welcher einen Ursprung (0') eines Fahrzeugkoordinatensystems (12) bildet, ermittelt wird, der ermittelte Vektor (v') von dem Fahrzeugkoordinatensystem (12) in ein globales Koordinatensystem (13) der Umgebungskarte (14) transformiert wird und der Positionswert (P) in der Umgebungskarte (14) anhand des transformierten Vektors (v) bestimmt wird, **dadurch gekennzeichnet, dass** die Umgebungskarte (14) als vektorielle Umgebungskarte (14) vorgesehen ist, in der das Objekt vektoriell abgelegt ist, wobei die Umgebungskarte einem Fahrerassistenzsystem bereitgestellt wird.

2. Verfahren nach Anspruch 1,
**dadurch gekennzeichnet, dass**
der Positionswert (P) zusätzlich anhand eines vorbestimmten Ursprungs (0) des globalen Koordinatensystems (13) bestimmt wird.

3. Verfahren nach Anspruch 1 oder 2,
**dadurch gekennzeichnet, dass**
der Ursprung (0') des Fahrzeugkoordinatensystems (12) in das globale Koordinatensystem (13) transformiert wird und der transformierte Ursprung (0") des Fahrzeugkoordinatensystems (12) in der Umgebungskarte (14) angezeigt wird.

4. Verfahren nach Anspruch 3,
**dadurch gekennzeichnet, dass**
eine Eigenbewegung des Kraftfahrzeugs (1) fortlaufend ermittelt wird und die Lage des Ursprungs (0') des Fahrzeugkoordinatensystems (12) in der Umgebungskarte (14) anhand der ermittelten Eigenbewegung des Kraftfahrzeugs (1) verändert wird.

5. Verfahren nach Anspruch 3 oder 4,
**dadurch gekennzeichnet, dass**
anhand des transformierten Ursprungs (0") des Fahrzeugkoordinatensystems (12) ein Bereich (15) zum Anzeigen des Positionswerts (P) in dem globalen Koordinatensystem (13) vorbestimmt wird.

6. Verfahren nach Anspruch 5,
**dadurch gekennzeichnet, dass**
der Positionswert (P) aus der Umgebungskarte (14) gelöscht wird, falls sich der Positionswert (P) des Objekts außerhalb des vorbestimmten Bereichs (15) befindet.

7. Verfahren nach einem der vorhergehenden Ansprüche,
**dadurch gekennzeichnet, dass**
zusätzlich zu dem Positionswert (P) zumindest eine Eigenschaft des Objekts in der Umgebungskarte (14) hinterlegt wird.

8. Verfahren nach Anspruch 7,
**dadurch gekennzeichnet, dass**
als die zumindest eine Eigenschaft der ermittelte Vektor (v') und/oder ein Zeitpunkt, zu welchem die Position des Objekts ermittelt wurde und/oder eine Kennung des Objekts in der Umgebungskarte (14) hinterlegt wird.

9. Verfahren nach einem der vorhergehenden Ansprüche,
**dadurch gekennzeichnet, dass**
Abmessungen eines Anzeigeelements (21) zum Anzeigen des Positionswerts (P) in der Umgebungskarte (14) in Abhängigkeit von einem eine Genauigkeit des Erfassung der Position des Objekts beschreibenden Kovarianzwerts angepasst wird.

10. Verfahren nach Anspruch 9
**dadurch gekennzeichnet, dass**
die Position des Objekts mit zumindest zwei Abstandsensoren der Sensoreinrichtung ermittelt wird und die Abmessungen des Anzeigeelements (21) in Abhängigkeit von der mit den zumindest zwei Abstandsensoren ermittelten Position angepasst werden.

11. Fahrerassistenzsystem (1) für ein Kraftfahrzeug (1) mit einer Steuereinrichtung (3), welche dazu ausgelegt ist, ein Verfahren nach einem der vorhergehenden Ansprüche durchzuführen.

12. Fahrerassistenzsystem (2) nach Anspruch 11,
**dadurch gekennzeichnet, dass**
die Steuereinrichtung (3) dazu ausgelegt ist, das Kraftfahrzeug (3) anhand der Umgebungskarte (14) zumindest semi-autonom zu manövrieren.

13. Kraftfahrzeug (1) mit einem Fahrerassistenzsystem (2) nach einem der Ansprüche 11 oder 12.

## Claims

1. Method for generating a surroundings map (14) of a surrounding area (7) of a motor vehicle (1) in which an object in the surrounding area (7) is detected by means of a sensor device (9) of the motor vehicle (1), a position value (P) that describes a position of the object is determined on the basis of sensor data of the sensor device (9) by means of a control device (3) of the motor vehicle (1) and the determined position value (P) is transferred into the surroundings map (14), wherein a vector (v') between the object and a predetermined reference point (11) of the motor vehicle (1) that forms an origin (0') of a vehicle coordinate system (12) is determined, the determined vector (v') is transformed from the vehicle coordinate system (12) into a global coordinate system (13) of the surroundings map (14) and the position value (P) in the surroundings map (14) is determined on the basis of the transformed vector (v), **characterized in that** the surroundings map (14) is provided as a vectorial surroundings map (14), in which the object is stored vectorially, wherein the surroundings map is provided for a driver assistance system.

2. Method according to Claim 1,
**characterized in that**
the position value (P) is determined additionally on the basis of a predetermined origin (0) of the global coordinate system (13).

3. Method according to Claim 1 or 2,
**characterized in that**
the origin (0') of the vehicle coordinate system (12) is transformed into the global coordinate system (13) and the transformed origin (0") of the vehicle coordinate system (12) is indicated in the surroundings map (14).

4. Method according to Claim 3,
**characterized in that**
a movement of the motor vehicle (1) itself is continuously determined and the position of the origin (0') of the vehicle coordinate system (12) in the surroundings map (14) is changed on the basis of the determined movement of the motor vehicle (1) itself.

5. Method according to Claim 3 or 4,
**characterized in that**
on the basis of the transformed origin (0") of the vehicle coordinate system (12), an area (15) for indicating the position value (P) in the global coordinate system (13) is predetermined.

6. Method according to Claim 5,
**characterized in that**
the position value (P) is erased from the surroundings map (14) if the position value (P) of the object is outside the predetermined area (15).

7. Method according to one of the preceding claims,
**characterized in that**
in addition to the position value (P), at least one characteristic of the object is stored in the surroundings map (14).

8. Method according to Claim 7,
**characterized in that**
the determined vector (v') and/or a time at which the position of the object was determined and/or an identification of the object is stored in the surroundings map (14) as the at least one characteristic.

9. Method according to one of the preceding claims,
**characterized in that**
dimensions of an indicating element (21) for indicating the position value (P) in the surroundings map (14) are adapted in dependence on a covariance value describing an accuracy of the detection of the position of the object.

10. Method according to Claim 9,
**characterized in that**
the position of the object is determined by at least two distance sensors of the sensor device and the dimensions of the indicating element (21) are adapted in dependence on the position determined by the at least two distance sensors.

11. Driver assistance system (1) for a motor vehicle (1) with a control device (3), which is designed to carry out a method according to one of the preceding claims.

12. Driver assistance system (2) according to Claim 11,
**characterized in that**
the control device (3) is designed to manoeuvre the motor vehicle (3) at least semi-autonomously on the basis of the surroundings map (14).

13. Motor vehicle (1) with a driver assistance system (2) according to either of Claims 11 and 12.

## Revendications

1. Procédé pour générer une carte d'environnement (14) d'une zone d'environnement (7) d'un véhicule automobile (1), selon lequel un objet est détecté dans la zone d'environnement (7) au moyen d'un dispositif de capteur (9) du véhicule automobile (1), une valeur de position (P), qui décrit une position de l'objet, est déterminée à l'aide de données de capteur du dispositif de capteur (9) au moyen d'un dispositif de commande (3) du véhicule automobile (1), et la valeur de position (P) déterminée est transmise dans la carte d'environnement (14), un vecteur (v') entre l'objet et un point de référence prédéterminé (11) du véhicule automobile (1), qui forme une origine (0') d'un système de coordonnées de véhicule (12), étant déterminé, le vecteur (v') déterminé étant transformé du système de coordonnées de véhicule (12) dans un système de coordonnées global (13) de la carte d'environnement (14) et la valeur de position (P) dans la carte d'environnement (14) étant déterminée à l'aide du vecteur transformé (v), **caractérisé en ce que** la carte d'environnement (14) est prévue sous forme de carte d'environnement vectorielle (14), dans laquelle l'objet est déposé de manière vectorielle, la carte d'environnement étant mise à la disposition d'un système d'assistance à la conduite.

2. Procédé selon la revendication 1, **caractérisé en ce que** la valeur de position (P) est en outre déterminée à l'aide d'une origine prédéterminée (0) du système de coordonnées global (13).

3. Procédé selon la revendication 1 ou 2, **caractérisé en ce que** l'origine (0') du système de coordonnées de véhicule (12) est transformée dans le système de coordonnées global (13) et l'origine transformée (0") du système de coordonnées de véhicule (12) est affichée dans la carte d'environnement (14).

4. Procédé selon la revendication 3, **caractérisé en ce qu'**un mouvement propre du véhicule automobile (1) est déterminé en continu et la position de l'origine (0') du système de coordonnées de véhicule (12) dans la carte d'environnement (14) est modifiée à l'aide du mouvement propre déterminé du véhicule automobile (1).

5. Procédé selon la revendication 3 ou 4, **caractérisé en ce qu'**une zone (15) d'affichage de la valeur de position (P) dans le système de coordonnées global (13) est prédéterminée à l'aide de l'origine transformée (0") du système de coordonnées de véhicule (12).

6. Procédé selon la revendication 5, **caractérisé en ce que** la valeur de position (P) est supprimée de la carte d'environnement (14) si la valeur de position (P) de l'objet se trouve en dehors de la zone prédéterminée (15) .

7. Procédé selon l'une quelconque des revendications précédentes, **caractérisé en ce qu'**en plus de la valeur de position (P), au moins une propriété de l'objet est enregistrée dans la carte d'environnement (14).

8. Procédé selon la revendication 7, **caractérisé en ce que** le vecteur déterminé (v') et/ou un moment auquel la position de l'objet a été déterminée et/ou une identification de l'objet sont enregistrés dans la carte d'environnement (14) en tant que l'au moins une propriété.

9. Procédé selon l'une quelconque des revendications précédentes, **caractérisé en ce que** les dimensions d'un élément d'affichage (21) pour l'affichage de la valeur de position (P) dans la carte d'environnement (14) sont adaptées en fonction d'une valeur de covariance décrivant une précision de la détection de la position de l'objet.

10. Procédé selon la revendication 9, **caractérisé en ce que** la position de l'objet est déterminée avec au moins deux capteurs de distance du dispositif de capteur et **en ce que** les dimensions de l'élément d'affichage (21) sont adaptées en fonction de la position déterminée avec les au moins deux capteurs de distance.

11. Système d'assistance à la conduite (1) pour un véhicule automobile (1) comprenant un dispositif de commande (3), qui est conçu pour réaliser un procédé selon l'une quelconque des revendications précédentes.

12. Système d'assistance à la conduite (2) selon la revendication 11, **caractérisé en ce que** le dispositif de commande (3) est conçu pour manœuvrer le véhicule automobile (3) de manière au moins semi-autonome à l'aide de la carte d'environnement (14).

13. Véhicule automobile (1) comprenant un système d'assistance à la conduite (2) selon l'une quelconque des revendications 11 ou 12.
